# DEMANDE DE BREVET EUROPEEN

(11) **EP 0 748 940 A1**
(43) Date de publication de la demande: **18.12.1996**
(21) Numéro de dépôt: 96401239.7
(22) Date de dépôt: 10.06.1996
(51) Int. Cl.: F04D 19/04, F04D 29/04

(54) **Pompe turbomoléculaire**

(30) Priorité: 16.06.1995 FR 9507213
(71) Demandeur: ALCATEL CIT, 75008 Paris (FR)
(72) Inventeur: Dauvillier, Olivier, 74000 Annecy (FR)
(74) Mandataire: Pothet, Jean Rémy Emile Ludovic

(57) **Abrégé**

Pompe turbomoléculaire comprenant un stator (1, 9) et un rotor (2) supporté dans le stator par le moyen de deux paliers à roulements (6, 8) dont l'un (8) au moins est en appui sur au moins une portée (16) du stator (9-1) servant de butée axiale pour le rotor (2), caractérisée en ce que ledit appui dudit roulement (8) sur ladite portée (16) est un appui en flexion et non pas en cisaillement.

## Description

La présente invention concerne une pompe turbomoléculaire montée sur paliers à roulements.

Par pompe turbomoléculaire, on entend une pompe mécanique tournante à ailettes ou du type holweck ou une combinaison des deux. Dans de nombreuses applications, en particulier dans le domaine de l'instrumentation, les pompes turbomoléculaires doivent avoir un niveau vibratoire très faible.

Il est connu d'assurer une isolation vibratoire radiale au moyen d'un joint torique en élastomère disposé autour des roulements de paliers.

Dans le sens axial, au moins l'un des roulements prend appui sur un épaulement du stator, cet appui servant de référence de positionnement axial déterminant les jeux axiaux entre rotor et stator. Cet épaulement d'appui travaille en cisaillement sous l'effet de la charge axiale. Or, le système oscillant constitué par le rotor en appui sur cet épaulement par l'intermédiaire du roulement possède une grande raideur, et sa fréquence propre d'oscillation se situe malheureusement, justement, dans la gamme de vitesse nominale de rotation des pompes.

La présente invention a pour but de proposer une pompe présentant une raideur axiale plus faible de telle sorte que la fréquence propre d'oscillation axiale du rotor corresponde à une vitesse de rotation du rotor très inférieure à sa vitesse de rotation nominale.

L'invention a ainsi pour objet une pompe turbomoléculaire comprenant un stator et un rotor supporté dans le stator par le moyen de deux paliers à roulements dont l'un au moins est en appui sur au moins une portée du stator servant de butée axiale pour le rotor, caractérisée en ce que ledit appui dudit roulement sur ladite portée est un appui en flexion et non pas en cisaillement.

Ainsi, on obtient une bonne isolation vibratoire du rotor axialement tout en assurant cependant un appui suffisamment rigide pour servir de référence axiale pour les jeux axiaux entre le rotor et le stator ce qui ne serait pas obtenue avec un appui sur une rondelle élastomère.

Cette portée d'appui peut constituer une unique portée circulaire ou bien être constituée par une pluralité, trois par exemple, de portées constituant chacune une poutre travaillant en flexion.

On va maintenant donner la description d'un exemple de mise en oeuvre de l'invention en se référant au dessin annexé dans lequel :

La figure 1 représente une pompe turbomoléculaire selon l'invention.

La figure 2 montre un détail agrandi de la figure 1.

En se référant aux figures, la pompe turbomoléculaire comprend un stator 1 et un rotor 2. Le rotor 2 est lié à un arbre 3 par une vis de serrage 4 venant serrer le rotor 2 et la bague interne 5 d'un premier roulement 6 contre un épaulement 7 de l'arbre 3.

Le rotor 2 est supporté dans le stator 1 par le premier roulement 6 et par un deuxième roulement 8 montés dans la partie interne 9 du stator 1 par l'intermédiaire d'un joint rotorique antivibratoire : 10 pour le roulement 6 et 11 pour le roulement 8. Ces joints 10 et 11, en élastomère, assurent l'isolation vibratoire radiale du rotor 2 dans le stator 1. La bague interne 12 du roulement 8 est serrée contre un épaulement 13 de l'arbre 3 par une vis de serrage 14. La référence de positionnement axiale du rotor 2 dans le stator 1 est donnée par l'appui de la bague extérieure 15 du roulement 8 contre une portée 16 de la partie 9 du stator 1 par le moyen d'un ressort de précharge 17 s'appuyant d'une part sur une portée 18 du stator et d'autre part contre la bague extérieure 19 du roulement 6 poussant l'ensemble du rotor vers le haut jusqu'à l'appui de la bague extérieure 15 du roulement 8 contre ladite portée 16.

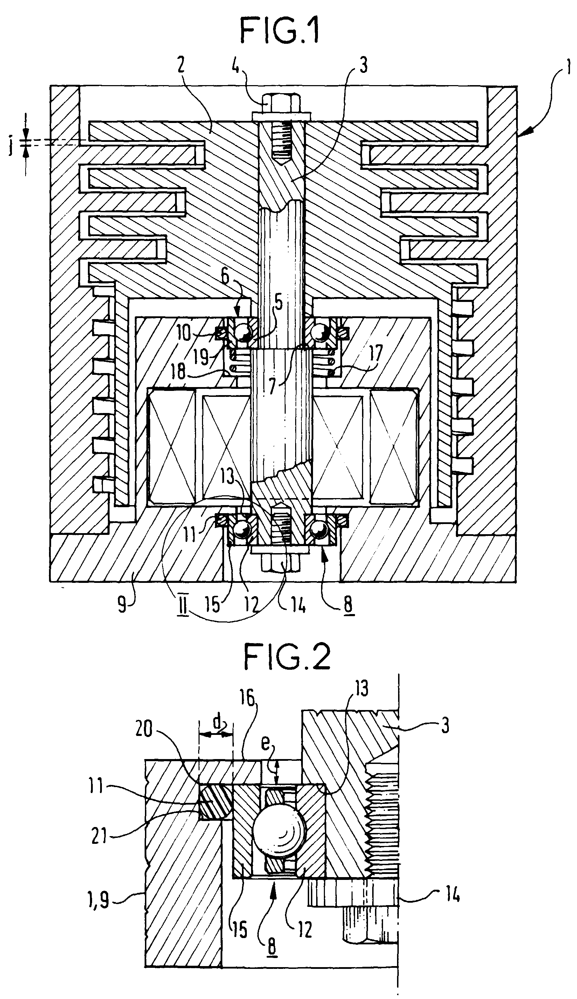

Conformément à l'invention et comme on le voit bien sur la figure 2, l'appui de la bague extérieure 15 du roulement 8 contre la portée 16 est un appui en flexion et non pas en cisaillement.

En effet, la bague 15 s'appuie sur la portée 16 non pas en fond de portée: en 20, mais seulement à une certaine distance d, de ce fond de façon à faire agir la portée en flexion.

On profite de cette construction pour placer le joint anti-vibratoire 11 contre cette portée 16 dans une gorge aménagée 21. La profondeur de la gorge comptant bien entendu pour le "porte à faux" de la portée 16. Bien entendu, il est avantageux de profiter de cette portée 16 pour placer à cet endroit le joint mais cela n'est pas nécessaire et il pourrait être placé plus bas sur la bague extérieure 15.

La portée 16 est une unique portée circulaire, mais on peut aussi très bien constituer cet appui par plusieurs appuis constituant chacun une sorte de poutre, par exemple trois poutres, travaillant en flexion.

A titre d'exemple, on peut donner les valeurs suivantes :
Le rotor de pompe, tout compris avec son arbre, a une masse de 250 gr
La vitesse nominale de rotation est de 60 000 tours par minute
La portée 16 est une unique portée circulaire de diamètre intérieur 13 mm, la distance d est égale à 7 mm et l'épaisseur e de cette portée est de 0,7mm.
La résonance vibratoire axiale est située à une vitesse de rotation de 30000 tours par minute.

La raideur axiale de l'ensemble est de 2,510⁶N/m.

Cette raideur est suffisante pour assurer les jeux axiaux j= 0,3 mm entre ailettes statoriques et rotoriques

## Revendications

1. Pompe turbomoléculaire comprenant un stator (1, 9) et un rotor (2) supporté dans le stator par le moyen de deux paliers à roulements (6, 8) dont l'un (8) au moins est en appui sur au moins une portée (16) du stator (9-1) servant de butée axiale pour le rotor (2), caractérisée en ce que ledit appui dudit roulement (8) sur ladite portée (16) est un appui en flexion et non pas en cisaillement.

2. Pompe turbomoléculaire selon la revendication 1, caractérisé en ce que ladite portée (16) est une unique portée circulaire.

3. Pompe turbomoléculaire selon la revendication 1, caractérisée en ce qu'elle comporte plusieurs portée d'appui (16) constituant chacune une poutre travaillant en flexion.
